# EUROPÄISCHE PATENTSCHRIFT

(11) **EP 0 878 288 B1**
(45) Veröffentlichungstag und Bekanntmachung des Hinweises auf die Patenterteilung: **01.08.2001**
(21) Anmeldenummer: 98108145.8
(22) Anmeldetag: 05.05.1998
(51) Int. Cl.: B29C 65/48, F16B 11/00, F16B 12/04

(54) **Kunststoffelement zur Befestigung von Holz**
Plastic element for fastening wood
Elément en matière plastique pour la fixation de bois

(30) Priorität: 17.05.1997 DE 19720878
(43) Veröffentlichungstag der Anmeldung: 18.11.1998
(73) Patentinhaber: Adolf Würth GmbH & Co. KG, 74653 Künzelsau (DE)
(72) Erfinder: Humm, Siegfried, 74214 Schöntal-Westernhausen (DE); Wieland, Achim, 74211 Leingarten (DE)
(74) Vertreter: Patentanwälte Ruff, Beier und Partner

(56) Entgegenhaltungen:
- EP-A- 0 823 561
- DE-A- 3 322 974
- DE-A- 3 519 679
- DE-A- 3 828 340
- DE-A- 4 416 884
- DE-A- 19 546 743

## Beschreibung

Die Erfindung betrifft ein Kunststoffelement, das an einer aus Holz bestehenden Fläche angebracht werden soll, beispielsweise zur Anbringung eines weiteren Elements, das dann an dem Kunststoffelement befestigt wird. Es ist bekannt, daß sich Kunststoff an Holz nur schwer verkleben läßt, siche Z.B. DE 3828340.

Der Erfindung liegt die Aufgabe zugrunde, ein Kunststoffelement zu schaffen, das sich mit Holz verkleben läßt und dabei eine belastungfähige Verbindung ergibt.

Zur Lösung dieser Aufgabe schlägt die Erfindung ein Kunststoffelement mit den im Anspruch 1 genannten Merkmalen vor. Weiterbildungen der Erfindung sind Gegenstand von Unteransprüchen.

Die Erfindung schlägt ebenfalls eine Anordnung mit den Merkmalen der Ansprüche 8 und 9 sowie eine Verwendung mit den Merkmalen des Anspruchs 10 vor.

Zum Verkleben dieses Kunststoffelements mit dem aus Holz bestehenden Bauteil wird eine Schicht aus Kleber bzw. Leim auf beiden Elementen oder auf einem der beiden Elemente aufgebracht und die beiden Flächen dann gegeneinander gedrückt. Dabei gelangt der Leim durch die Öffnungen in die Ausnehmungen, die er mindestens im Bereich der Ränder der Öffnungen ausfüllt. Nach dem Hartwerden des Leims entstehen dadurch hinter den Rändern der Öffnungen Pfropfen oder fest gewordene Teile des Leims, die damit an sehr vielen Stellen zu einer formschlüssigen Festlegung des Leims an dem Kunststoffmaterial führen. Damit wird eine belastbare Verbindung zwischen dem aus Holz bestehenden Bauteil und dem Kunststoff hergestellt.

Eine Möglichkeit zur Herstellung der sich zu der Befestigungsfläche verjüngenden Ausnehmungen besteht darin, die Ausnehmungen als von einer gegenüberliegenden Fläche ausgehende Löcher auszugestalten, die sich in ihrem Öffnungsbereich verjüngen. Beispielsweise können die Löcher als zylindrische Bohrungen ausgebildet sein, die in ihrem Öffnungsbereich kegelförmig verjüngt sind. Derartige Ausbildungen lassen sich bei der Herstellung des Kunststoffelements durch Spritzgießen einfach durch Zapfen mit herstellen.

Eine andere Möglichkeit könnte darin bestehen, die Ausnehmungen als Schlitze zu gestalten, deren beide in der Befestigungsfläche liegende Ränder einen kleineren Abstand voneinander aufweisen als die Wände der Schlitze mit Abstand von der Befestigungsfläche. Auch auf diese Weise lassen sich lange Ränder herstellen, die zur Verriegelung durch den aushärtenden Leim beitragen.

Das auf diese Weise an dem Holz angeklebte Bauteil kann nun seinerseits mit Anbringungseinrichtungen für ein weiteres Bauteil versehenen sein, beispielsweise ein metallisches Beschlagteil, eine Befestigungsschraube, eine Gewindehülse oder dergleichen.

In Weiterbildung der Erfindung kann vorgesehen sein, daß das aus Kunststoff bestehende Element eine zweite Befestigungsfläche aufweist, die in gleicher oder ähnlicher Weise ausgebildet ist wie die erste Befestigungsfläche und die zur Klebverbindung mit einer anderen Fläche entweder des gleichen aus Holz bestehenden Bauteils oder eines zweiten Bauteils dient. Auf diese Weise lassen sich beispielsweise zwei aus Holz bestehende Bauteile mit dem Kunststoffelement und damit miteinander verbinden. Ein Beispiel ist die Verbindung zweier Platten zur Herstellung einer größeren Platte.

Insbesondere kann dabei vorgesehen sein, daß die beiden Befestigungsflächen die gegenüberliegenden Flachseiten des als Platte ausgebildeten Kunststoffelements M1 sind.

Hierbei kann vorgesehen sein, daß die Ausnehmungen als Löcher ausgebildet sind, die sich verjüngen, wobei die Löcher abwechselnd zu der einen und der anderen Seite hin verjüngt ausgebildet sind. Auch auf diese Weise kann die einfache Herstellung beim Kunststoff Büchsen in einer relativ einfachen Form gewährleistet werden.

Mithilfe eines von der Erfindung vorgeschlagenen aus Kunststoff bestehenden Elements lassen sich, wie bereits erwähnt, zwei Bauteile aus Holz dadurch miteinander verbinden, daß das erste Bauteil mit einer Fläche der Kunststoffplatte und das zweite mit einer anderen Fläche des Kunststoffs M1 verbunden wird.

Insbesondere kann die Verbindung so geschehen, daß das aus Kunststoff bestehenden Element vollständig in zwei gegenüberliegenden Nuten der beiden Bauteile angeordnet ist und die Verklebung mit den Nutflanken erfolgt. In diesem Fall ist das Kunststoffelement von außen nach Herstellung der Verbindung nicht mehr sichtbar. An der Verbindungsstelle der beiden Holzteile ist allenfalls eine Trennfuge zu sehen.

Die Erfindung schlägt ebenfalls die Verwendung eines aus Kunststoff bestehenden Elements mit den geschilderten Merkmalen zur Klebeverbindung mit einem aus Holz bestehenden Bauteil vor.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung zweier bevorzugter Ausführungsformen der Erfindung sowie anhand der Zeichnung. Hierbei zeigen:
- Fig. 1: eine Aufsicht auf eine Breitseite eines aus Kunststoff bestehenden Elements;
- Fig. 2: eine teilweise geschnittene Seitenansicht eines Elements zur Anbringung einer Schraube an einem Holzteil;
- Fig. 3: in vergrößertem Maßstab einen Teilschnitt durch das Kunststoffelement der Fig. 1 und 2;
- Fig. 4: einen Schnitt durch eine Kunststoffplatte bei einer zweiten Ausführungsform;
- Fig. 5: eine schematische Aufsicht auf ein Kunststoffelement der Ausführungsform nach Fig. 4;
- Fig. 6: schematisch die Anordnung des Kunststoffelements der Fig. 5 zur Verbindung zweier Holzplatten.

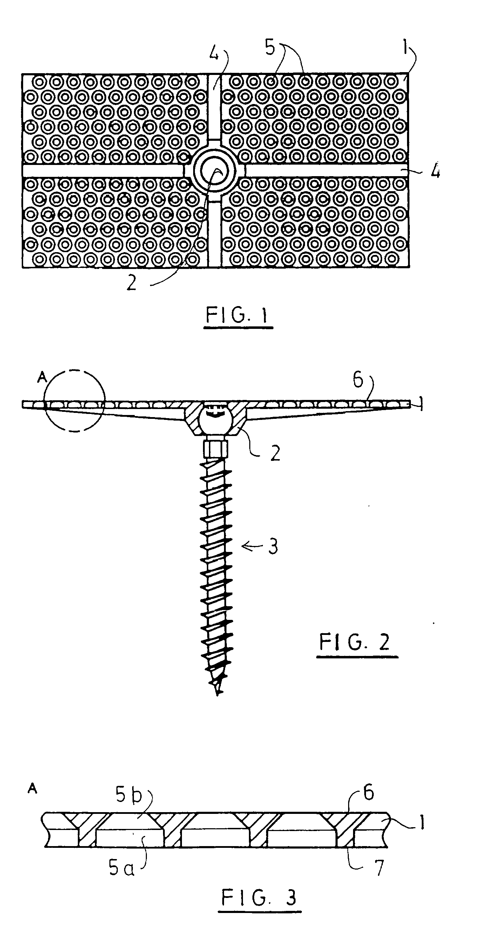

Das in Fig. 1 dargestellte Kunststoffelement weist die Form einer rechteckigen Platte 1 auf. In der Mitte der Platte 1 ist eine Halterung 2 zur Anbringung einer Schraube 3 ausgebildet. Diese Halterung 2 ist bei der Herstellung der Kunststoffplatte 1 durch Spritzgießen gleich mit angeformt worden. Die Kunststoffplatte 1 ist also einstückig ausgebildet. Von der mittig angeordneten Halterung 2 erstrecken sich vier Verstärkungsrippen 4 parallel zu den Seiten bis zu den Rändern. Im übrigen Bereich enthält die Platte 1 eine Vielzahl von kreisrunden Löchern 5, die von der in Fig. 1 sichtbaren Rückseite aus zu der gegenüberliegenden Fläche durchgehen und sich dort verjüngen, so daß von der Rückseite her die verkleinerten ebenfalls kreisrunden Öffnungen zu sehen sind.

Fig. 2 zeigt die Platte 1 der Fig. 1 von der Seite im Schnitt, wobei in die Halterung 2 die bereits erwähnte Schraube 3 eingesetzt ist. Dieses Beschlagteil soll mit Hilfe der Platte 1 an einer Holzplatte befestigt werden. Dies geschieht dadurch, daß eine Leimschicht zwischen die Holzplatte und die der Holzplatte zugewandte Fläche 6 der Kunststoffplatte gebracht wird und daß die Holzplatte und die Kunststoffplatte 1 aufeinander gelegt und gedrückt werden. Dadurch dringt der Leim in die Vielzahl der Löcher 5 ein und bildet dort hinter den Öffnungen der Löcher Wulste oder Pfropfen, die sich dort nach dem Aushärten verriegeln.

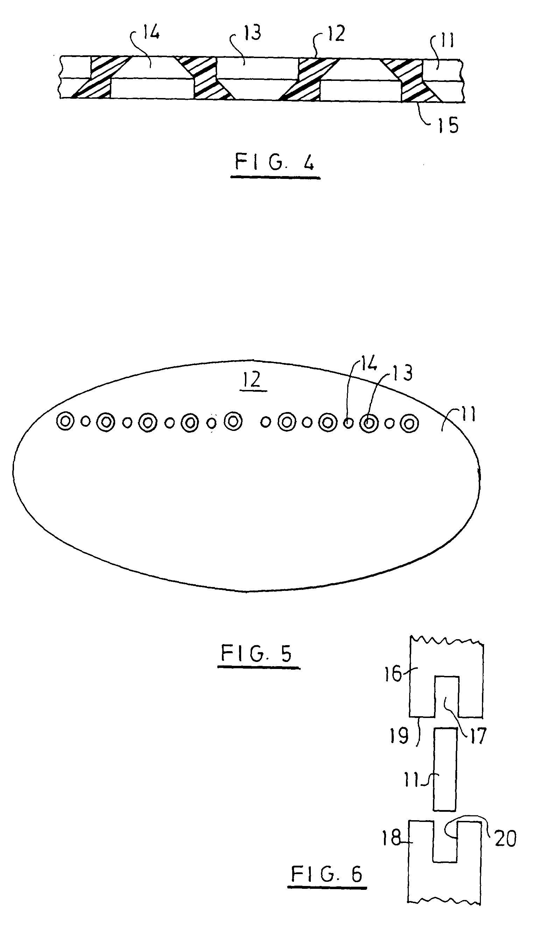

Fig. 3 zeigt in vergrößertem Maßstab einen Schnitt durch die Platte 1 mit den Löchern 5. In Fig. 3 ist die obere Seite der Kunststoffplatte die Befestigungsfläche 6. Von der gegenüberliegenden Rückseite 7 gehen die Löcher 5 aus, zunächst als kreiszylindrische Löcher 5 a, die dann in einen kegelstumpfförmigen Teil 5 b übergehen. Eine solche Art der Löcher 5 läßt sich beim Kunststoffspritzgießen der Platte 1 durch Zapfen einfach herstellen.

Die Ausführungsform der Fig. 1 zeigt eine Kunststoffplatte, mit der ein beispielsweise aus Metall bestehendes Element an einem Holzteil befestigt werden kann. Die Erfindung betrifft jedoch auch das Verbinden zweier Holzteile mit Hilfe eines aus Kunststoff bestehenden Elements. Diese Möglichkeit ist in den Figuren 4 bis 6 dargestellt. In Fig. 5 ist ein Kunststoffelement 11 in Form einer ovalen Platte dargestellt. Die Platte ist relativ dünn und weist eine Vorderseite 12 und eine Rückseite 15 auf. Beide Seiten sind eben und parallel. Zwischen beiden Seiten der Platte 11 erstreckt sich eine Vielzahl von Öffnungen 13, 14, von denen in Fig. 5 nur eine Reihe gezeichnet ist. Die Fig. 4 zeigt einen Schnitt durch die Kunststoffplatte 11 längs einer Reihe von Öffnungen 13, 14. Die Öffnungen 14 gehen von der in Fig. 5 nicht zu sehenden Rückseite zu der Vorderseite 12 und verjüngen sich zu der Vorderseite 12 hin. Die Löcher 13 verlaufen umgekehrt, das heißt, sie gehen von der Vorderseite 12 aus, sind zunächst kreiszylindrisch und verjüngen sich dann in ihrem Querschnitt zu der anderen Seite 15 hin. Die aus Gründen der Vereinfachung in Fig. 5 nur mit einer Reihe von Löchern dargestellte Platte 11 enthält natürlich eine Vielzahl von über ihrer Oberfläche verteilten Öffnungen 13, 14, ähnlich wie die Platte der Fig. 1. Die Platte 11 kann also mit Hilfe einer Leimschicht auf beiden Seiten mit je einem Holzelement verklebt werden. Die Platte 11 ist dazu bestimmt, in der in Fig. 6 zu sehenden Art verwendet zu werden. In Fig. 6 ist schematisch ein erstes aus Holz bestehendes Bauteil 16 mit einer Nut 17 dargestellt. Dieses Bauteil 16 soll mit einem zweiten Bauteil 18 gleicher Dicke verbunden werden, das ebenfalls eine Nut 17 aufweist. Die Tiefe beider Nuten 17 zusammen ist mindestens so groß wie die Querabmessung der Platte 11. Die Nuten 17 können in der Richtung senkrecht zur Papierebene begrenzt sein oder sich auch bis zu den Enden der Bauteile 16, 18 erstrecken. Zur Herstellung der Verbindung wird auf beide Flachseiten 12, 15 der Platte 11 eine Leimschicht aufgebracht und die Platte 11 in der dargestellten Position in eine der beiden Nuten 17 eingeschoben. Anschließend wird das jeweils andere Bauteil aufgeschoben und die beiden Bauteile aufeinander zu geschoben, bis sich ihre Stirnkanten 19 berühren. Natürlich kann auch zwischen den Stirnkanten 19 eine Leimschicht vorhanden sein. Dadurch entsteht eine Klebeverbindung zwischen den Bauteilen 16 und 18, die nicht nur zwischen den Stirnkanten 19, sondern zwischen den Nutflanken 20 und der Platte 11 besteht. Es entsteht also eine Klebeschicht, die sich über eine große Fläche erstreckt und daher sehr haltbar ist.

## Patentansprüche

1. Kunststoffelement zur Befestigung an einem aus Holz bestehenden Bauteil durch Verkleben, enthaltend:
1.1 eine zur flächigen Anlage an dem Bauteil bestimmte Fläche (6, 12, 15),
1.2 dadurch gekennzeichnet, daß das Kunststoffelement eine Vielzahl von in der zur Anlage bestimmten
Fläche (6, 12, 15) hin offenen Ausnehmungen aufweist,
1.3 deren Öffnungen in der Fläche (6, 12, 15) kleiner sind als der Querschnitt der Ausnehmungen in einem Abstand von der Fläche (6, 12, 15).

2. Kunststoffelement nach Anspruch 1, bei dem mindestens ein Teil der Ausnehmungen als von einer gegenüberliegenden Fläche (7, 15, 12) ausgehende Löcher (5, 13, 14) ausgebildet sind.

3. Kunststoffelement nach Anspruch 1 oder 2, bei dem mindestens ein Teil der Ausnehmungen als Schlitze ausgebildet sind.

4. Kunststoffelement nach einem der vorhergehenden Ansprüche, als einstückiges Spritzgußteil hergestellt.

5. Kunststoffelement nach einem der vorhergehenden Ansprüche, mit einer Anbringungseinrichtung (2) für ein weiteres Bauteil (3).

6. Kunststoffelement nach einem der vorhergehenden Ansprüche, mit zwei Befestigungsflächen (12, 15) zur Klebeverbindung mit zwei aus Holz bestehenden Bauteilen.

7. Kunststoffelement nach Anspruch 6, bei dem die beiden Befestigungsflächen (12, 15) die gegenüberliegenden Flachseiten des als Platte (11) ausgebildeten Kunststoffelements sind.

8. Anordnung zur Verbindung zweier aus Holz bestehender Bauelemente miteinander, bei der ein Kunststoffelement nach einem der vorhergehenden Ansprüche mit einer Befestigungsfläche (12) mit dem ersten Bauelement und mit einer Befestigungsfläche (15) mit dem anderen zu verbindenden Bauteil verklebt wird.

9. Anordnung nach Anspruch 8, bei dem das Kunststoffelement vollständig in zwei gegenüberliegenden Nuten (17) der beiden Bauteile (16, 18) angeordnet ist und die Verklebung mit den Nutflanken (20) erfolgt.

10. Verwendung eines Kunststoffelements mit einem oder mehreren sich auf das Kunststoffelement beziehenden Merkmalen aus einem der vorhergehenden Ansprüche zur Verbindung zweier aus Holz bestehender Bauteile miteinander.

## Claims

1. Plastic element for fastening to a wooden component by bonding, containing:
1.1 a surface (6, 12, 15) for flat engagement on the component,
1.2 characterized in that the plastic element has a plurality of recesses open towards the surface (6, 12, 15) intended for engagement,
1.3 whose openings in the surface (6, 12, 15) are smaller than the cross-section of the recesses with a spacing from the surface (6, 12, 15).

2. Plastic element according to claim 1, wherein at least part of the recesses are constructed as holes (5, 13, 14) emanating from an opposite surface (7, 15, 12).

3. Plastic element according to claim 1 or 2, wherein at least part of the recesses are in the form of slits.

4. Plastic element according to one of the preceding claims, manufactured as a one-piece injection moulding.

5. Plastic element according to one of the preceding claims, with an attachment device (2) for a further component (3).

6. Plastic element according to one of the preceding claims, with fastening surfaces (12, 15) for adhesion bonded joining with two wooden components.

7. Plastic element according to claim 6, wherein the two fastening surfaces (12, 15) are the opposite flat sides of the plastic element constructed as a plate (11).

8. Arrangement for the joining of two wooden components to one another, in which a plastic element according to one of the preceding claims is bonded by one fastening surface (12) to the first component and with another fastening surface (15) to the other of the components to be joined.

9. Arrangement according to claim 8, wherein the plastic element is placed completely in two facing slots (17) of the two components (16, 18) and bonding takes place with the slot sides (20).

10. Use of a plastic element with one or more of the features from the preceding claims relating to the plastic element for joining together two wooden components.

## Revendications

1. Elément en matière plastique pour la fixation d'un composant en bois par collage, comprenant :
1.1 une surface (6, 12, 15) destinée à une application en surface contre le composant,
1.2 caractérisé en ce que l'élément en matière plastique présente un grand nombre d'évidements ouverts vers la surface (6, 12, 15) destinée à l'application,
1.3 dont les ouvertures sont plus petites dans la surface (6, 12, 15) que la coupe transversale des évidements à distance de la surface (6, 12, 15).

2. Elément en matière plastique selon la revendication 1, où au moins une partie des évidements est réalisée comme des trous (5, 13, 14) partant d'une surface opposée (7, 15, 12).

3. Elément en matière plastique selon la revendication 1 ou 2, où au moins une partie des évidements est réalisée comme des fentes.

4. Elément en matière plastique, selon l'une des revendications précédentes, fabriqué comme une pièce coulée par injection d'un seul tenant.

5. Elément en matière plastique selon l'une des revendications précédentes avec un dispositif de mise en place (2) pour un autre composant (3).

6. Elément en matière plastique selon l'une des revendications précédentes avec deux surfaces de fixation (12, 15) pour le collage avec deux composants en bois.

7. Elément en matière plastique selon la revendication 6, où les surfaces de fixation (12, 15) sont les faces plates opposées de l'élément en matière plastique ayant la forme d'une plaque (11).

8. Dispositif pour la liaison de deux composants en bois entre eux, où un élément en matière plastique selon l'une des revendications précédentes avec une surface de fixation (12) est collé avec le premier composant et avec une surface de fixation (15) avec l'autre composant à relier.

9. Dispositif selon la revendication 8, où l'élément en matière plastique est disposé complètement dans deux rainures opposées (17) des deux composants (16, 18) et le collage s'effectue avec les flancs de rainure (20).

10. Utilisation d'un élément en matière plastique avec une ou plusieurs caractéristiques se référant à l'élément en matière plastique d'une des revendications précédentes pour la liaison de deux composants en bois entre eux.
